# EUROPÄISCHE PATENTANMELDUNG

(11) **EP 3 228 164 A1**
(43) Veröffentlichungstag der Anmeldung: **11.10.2017**
(21) Anmeldenummer: 17401024.9
(22) Anmeldetag: 15.03.2017
(51) Int. Cl.: A01B 51/04

(54) **QUERBALKEN ZUM BEFESTIGEN UND TRAGEN VON WERKZEUGEN EINES LANDWIRTSCHAFTLICHEN GERÄTES**

(30) Priorität: 29.03.2016 DE 102016105650
(71) Anmelder: Amazonen-Werke H. Dreyer GmbH & Co. KG, 49205 Hasbergen (DE)
(72) Erfinder: Mertens, Daniel, 26121 Oldenburg (DE)

(57) **Zusammenfassung**

Querbalken zum Befestigen und Tragen von Werkzeugen eines landwirtschaftlichen Gerätes, wobei der Querbalken als aus zumindest zwei sich längs des Querbalkens erstreckender Längsprofilschienen zusammengesetzter und zusammengeschweißter, vorzugsweise rechteckartiger Hohlbalken ausgebildet ist. Um einen gewichtsoptimierten biegesteifen Querbalken zum Befestigen und Tragen von Werkzeugen eines landwirtschaftlichen Gerätes zu schaffen, ist vorgesehen, dass sich im Inneren des Hohlbalkens mit den Längsprofilschienen verbundene Versteifungsschienen und/oder Versteifungsprofile zur Erhöhung der Biegesteifigkeit befinden.

## Beschreibung

Die Erfindung betrifft einen Querbalken zum Befestigen und Tragen von Werkzeugen eines landwirtschaftlichen Gerätes gemäß des Oberbegriffes des Patentanspruches 1.

Ein derartiger Querbalken zum Befestigen und Tragen von Werkzeugen eines landwirtschaftlichen Gerätes ist in EP 2 005 811 A2 beschrieben. Dieses landwirtschaftliche Gerät ist als Sämaschine ausgebildet und weist einen sich quer zur Fahrtrichtung erstreckenden langgestreckten Querbalken auf. Auf der Vorderseite sind mittig an diesem Querbalken Dreipunktkupplungselemente zum Ankuppeln der Sämaschine an einen Dreipunktkraftheber eines Ackerschleppers angeordnet. Auf der Rückseite des Querbalkens befinden sich Säschare, die ebenfalls über Halterungen an dem Querbalken befestigt sind. Dieser Querbalken ist als Quadratrohr mit gleichem Querschnitt über seine ganze Länge ausgebildet. Die Biegesteifigkeit bei diesem Querbalken muss auf die höchst erforderliche Biegesteifigkeit ausgelegt sein, so dass sich eine schwere Bauweise des Querbalkens ergibt. Hieraus resultiert auch ein sehr hohes Gewicht der Maschine.

Der Erfindung liegt die Aufgabe zu Grunde, einen gewichtsoptimierten biegesteifen Querbalken zum Befestigen und Tragen von Werkzeugen eines landwirtschaftlichen Gerätes zu schaffen.

Diese Aufgabe der erfindungsgemäß dadurch gelöst, dass sich im Inneren des Hohlbalkens mit den Längsprofilschienen verbundene Versteifungsschienen und/oder Versteifungsprofile zur Erhöhung der Biegesteifigkeit befinden.

Infolge dieser Maßnahme lassen sich gewichtsoptimierte biegesteife Querbalken schaffen, welche in verbesserter Weise, sogar zumindest annähernd individuell an die erforderliche Biegesteifigkeit angepasst werden können. Der jeweilige Querschnitt und die jeweilige Ausgestaltung des Querbalkens über seine Längserstreckung kann so an die entsprechenden Anforderungen, wie die Anzahl und den Abstand der an dem Querbalken angebrachten Werkzeuge abgestimmt und angepasst werden. Somit kann die Biegesteifigkeit über den Verlauf und Längserstreckung des Querträgers in einfacher Weise angepasst werden. Somit werden die in dem Querbalken auftretenden Spannungen minimiert und an die Anforderungen angepasst. Gleichzeitig wird das Gewicht des Querbalkens und die Kosten hierfür erheblich gegenüber den bekannten einen gleichförmigen Querschnitt über die gesamte Längserstreckung des Querbalkens reduziert. Es wird so in angepassterer Weise in den Querbalken weniger Material als bisher eingebracht.

Diese angepasste Biegesteifigkeit des Querbalkens über seine Längserstreckung wird dadurch erreicht, dass Versteifungsschienen und/oder Versteifungsprofile in ihrem Querschnitt, Verlauf und/oder Ausgestaltung den Verlauf und/oder Charakteristik der Biegesteifigkeit bestimmen.

Eine besonders vorteilhafte Ausgestaltung zur verbesserten Anpassung der Biegesteifigkeit über die gesamte Längserstreckung des Querbalkens kann dadurch verwirklicht werden, dass die Ausgestaltung der Versteifungsschienen und/oder Versteifungsprofile an die Anordnung der an dem Querbalken angeordneten Werkzeuge zur Erreichung der zumindest annähernd geforderten Biegesteifigkeit über die gesamte Länge des Querbalkens individuell angepasst ist.

Hierbei lässt sich die Anpassung der individuell geforderten Biegesteifigkeit dadurch erreichen, dass durch die Ausgestaltung der Versteifungsschienen oder Versteifungsprofile des Querbalkens die Biegesteifigkeit von Mitte des Querbalkens über seine jeweilige Hälfte zum jeweiligen äußeren Ende abnimmt.

Wenn die Anordnung und Anzahl der Werkzeuge an dem Querbalken festgelegt ist, ist vorgesehen, dass durch die Ausgestaltung der Versteifungsschienen und/oder Versteifungsprofile des Querbalkens die Biegesteifigkeit von Mitte des Querbalkens über seine jeweilige Hälfte zum jeweiligen äußeren Ende entsprechend der an dem Querbalken angeordneten Werkzeuge abnimmt.

In einer Ausgestaltung lässt sich ein Querbalken mit angepasster erforderlicher Biegesteifigkeit dadurch erreichen, dass die Profilschienen und/oder Versteifungsprofile mit den angeformten Versteifungsschienen als Abkantprofil ausgebildet sind.

In einer anderen Ausführungsform ist vorgesehen, dass die Versteifungsprofile als Rechteckeck- oder Quadratrohr ausgebildet ist und die Profilschienen außerhalb der als Rechteckeck- oder Quadratrohr ausgebildeten Versteifungsprofile mit unmittelbar an die Versteifungsprofile sich anschließenden angeformten oberen oder unteren Verbindungsplatten als Abkantprofil ausgebildet sind.

Weitere Einzelheiten der Erfindung sind der Beispielsbeschreibung und den Zeichnungen zu entnehmen. Die Zeichnungen zeigen
- Fig.1: das als Einzelkornsämaschine ausgebildete Gerät mit dem erfindungsgemäßen Querbalken in perspektivischer Ansicht bezogen auf die vorgesehene Fahrtrichtung von schräg vorne,
- Fig.2: den Querbalken der Einzelkornsämaschine gemäß Fig.1 nur mit den auf der Vorderseite des Querbalkens angeordneten Ankuppelrahmen mit Dreipunktkupplungselementen in perspektivischer Ansicht schräg von hinten,
- Fig.3: den Querbalken der Einzelkornsämaschine gemäß Fig.1 in der Darstellungsweise nach Fig.2, jedoch in Teilexplosionsdarstellung, wobei das in Fahrtrichtung gesehene linke hintere Teilsegment des Querbalkens in nach hinten versetzt er Darstellung dargestellt ist,
- Fig.4: die in Fahrtrichtung gesehene linke Hälfte des Querbalkens im vergrößerten Maßstab in der Ansicht gemäß Fig.2,
- Fig.5: den Querbalken in der Seitenansicht V - V,
- Fig.6: den Querbalken im Schnitt VI - VI,
- Fig.7: die in Fahrtrichtung gesehene linke Hälfte des Querbalkens im vergrößerten Maßstab in Explosionsdarstellung und in der Ansicht gemäß Fig.2,
- Fig.8: die Einzelheit X gemäß Fig.7 im vergrößerten Maßstab,
- Fig.9: einen anders ausgestalteten Querbalken der Einzelkornsämaschine gemäß Fig.1 nur mit den auf der Vorderseite des Querbalkens angeordneten Ankuppelrahmen mit Dreipunktkupplungselementen in perspektivischer Ansicht schräg von hinten,
- Fig.10: den Querbalken gemäß Fig.9 in der Darstellungsweise nach Fig.2, jedoch in Teilexplosionsdarstellung, wobei das in Fahrtrichtung gesehene linke hintere Teilsegment des Querbalkens in nach hinten versetzt er Darstellung dargestellt ist,
- Fig.11: die in Fahrtrichtung gesehene linke Hälfte des Querbalkens im vergrößerten Maßstab in der Ansicht gemäß Fig.10,
- Fig.12: den Querbalken gemäß Fig.11 in der Seitenansicht XII - XII,
- Fig.13: den Querbalken gemäß Fig.11 im Schnitt XIII - XIII,
- Fig.14: die in Fahrtrichtung gesehene linke Hälfte des Querbalkens gemäß Fig.10 im vergrößerten Maßstab in Explosionsdarstellung und in der Ansicht gemäß Fig.9 und
- Fig.15: die Einzelheit Y gemäß Fig.14 im vergrößerten Maßstab.

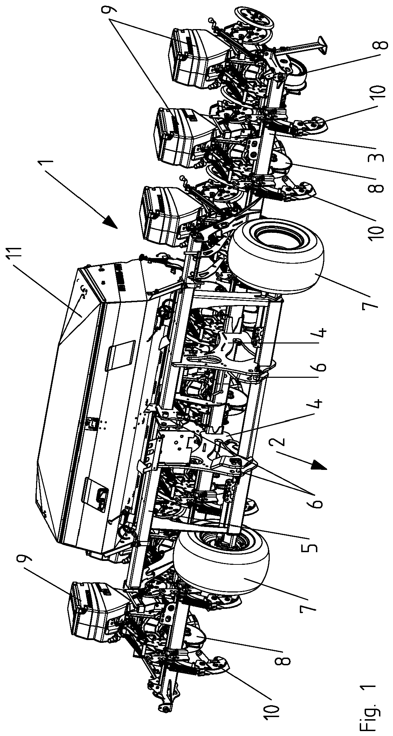

Das als Einzelkornsämaschine 1 gemäß Fig.1 ausgebildete landwirtschaftliche Gerät weist den sich quer zur Fahrtrichtung 2 sich längs erstreckenden Querbalken 3 auf. Auf der Vorderseite des Querbalkens 3 ist über geeignete Halterungen 4 der Tragrahmen 5 mit den Dreipunktkupplungselementen 6 zum Ankuppeln der Einzelkornsämaschine an einen nicht dargestellten Ackerschlepper und den als Fahrwerk dienenden Laufrädern 7 angeordnet. Auf der Rückseite des Querbalkens 3 sind beabstandet zueinander die als Werkzeuge 8 ausgebildeten Säschare mit der den Einzelkornsäaggregate 9 angeordnet. Auf der Vorderseite des Querbalkens 7 sind weiterhin die Düngerschares 10, die über Zuführungsleitungen mit einem an dem Tragrahmen 5 angeordneten Dosierorganen aufweisenden Vorratsbehälter 11 verbunden sind, angeordnet.

Der Querbalken 7 ist zum Befestigen und Tragen von Werkzeugen 8 in entsprechender Weise ausgebildet. Der Querbalken 7 ist als aus mehreren sich längs des Querbalkens 7 erstreckender Längsprofilschienen 12, 13 und Versteifungsprofil 14 zusammengesetzt, wie nachfolgend erläutert wird. Im Prinzip ist der Querbalken 7 als zusammengeschweißter, vorzugsweise rechteckartiger Hohlbalken ausgebildet.

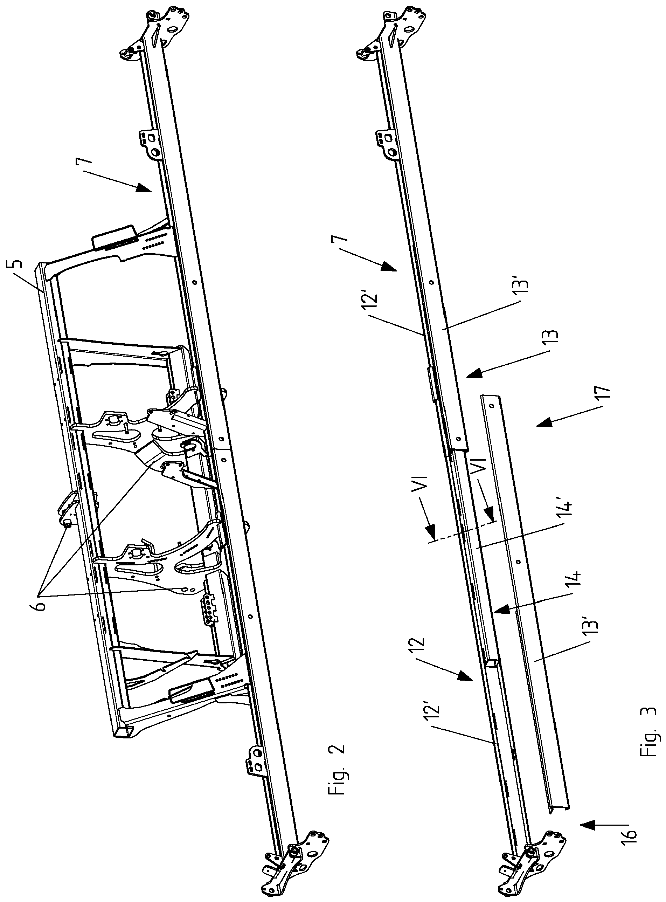

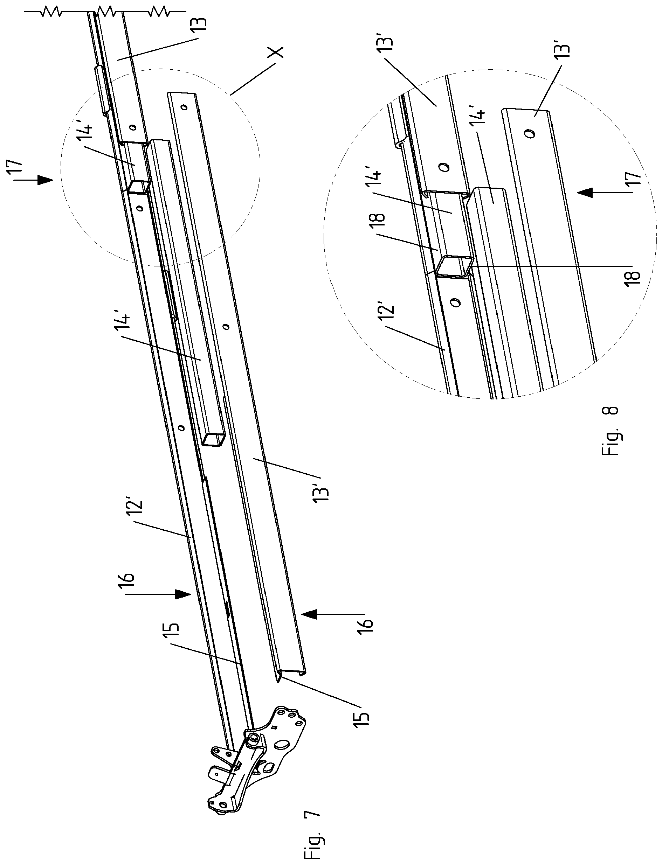

Der Querbalken 7 besteht zunächst aus zwei vorderen Längsprofilschienenhälften 12' der vorderen Längsprofilschiene 12 und aus zwei hinteren Längsprofilschienenhälften 13' der vorderen Längsprofilschiene 13, wie insbesondere Fig.3 und 7 zeigen. Im mittleren Bereich des Querbalkens 7 sind dem Inneren der aus den vorderen und hinteren Längsprofilschienen 12 und 13 zusammengesetzten äußeren Hülle des Querbalkens 7 ein oder zwei einander anschließende als Quadrathohlrohre 14' Versteifungsprofil 14 angeordnet. Die Längsprofilschienen 12 und 13 sind mit unmittelbar an die Versteifungsprofil 14 sich anschließenden angeformten oberen oder unteren Verbindungsplatten 15 als Abkantprofil in ihrem äußeren Bereich 16, etwa sich über ¼ der Länge des Querbalkens 7 erstreckend ausgebildet, während sich in der Mitte 17 des Querbalkens 7 etwa über die Hälfte der Länge des Querbalkens 7 erstreckend jeweils die obere und untere Fläche 18 der die Verstärkungsprofile bildenden Quadrathohlrohre 14 das Profil des Querbalkens 7 auf der ober und Unterseite des Querbalkens 7 schließen. Die Längsprofilschienenhälften sind mit dem Quadrathohlrohren miteinander zu dem Querbalken 7 als tragendes Element verschweißt. Wie aus insbesondere den Fig.7 und 8 zu erkennen ist, sind die Enden der Quadratrohre 14 und der Längsprofilschienenhälften 12', 13' in der Mitte 17 des Querbalkens 7 überlappend zueinander angeordnet, umso eine bessere Steifigkeit für den Querbalken 7zu erhalten.

Die Profilschienen 12 und 13 sind als Abkantprofil ausgebildet und weisen außerhalb der als Quadratrohr 14' ausgebildeten Versteifungsprofile 14 unmittelbar an die Versteifungsprofile 14 sich anschließend angeformte obere oder untere Verbindungsplatten 15 auf, die entsprechend mit den benachbarten Teilen des zu dem Querbalken 7 zusammengefügten Teilbereichen mit einander verschweißt sind.

Die sich in der mittleren Länge im Inneren des als Hohlbalken ausgebildeten 7 Querbalkens befindlichen und mit den Längsprofilschienen 12, 13 durch Verschweißen verbundenen als Quadratrohre 14' ausgebildeten Versteifungsprofile 14 dienen zur Erhöhung der Biegesteifigkeit des Querbalkens 7 in dessen mittleren Bereich, der sich etwa über die Hälfte der Länge des Querbalkens 7 seine Längserstreckung erstreckt.

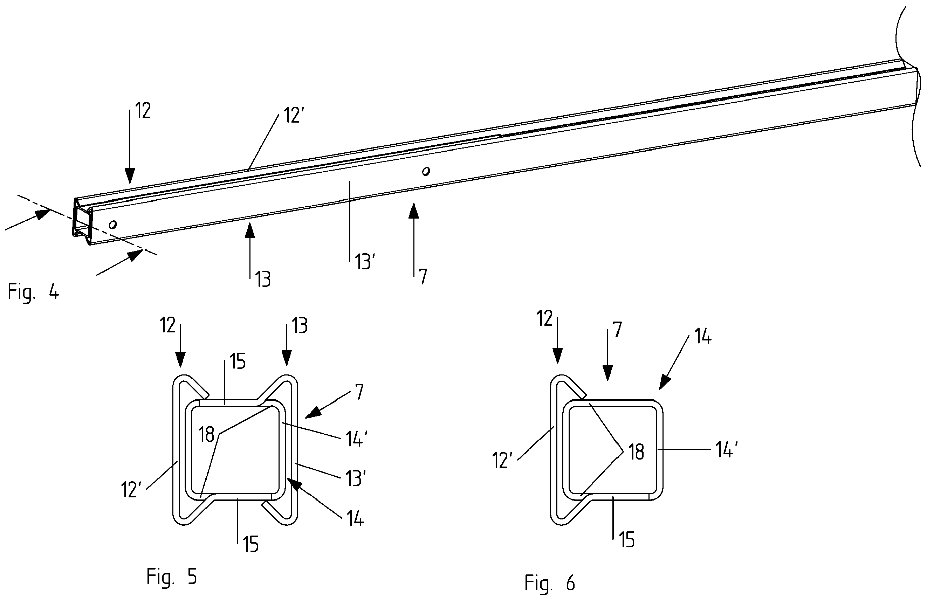

Somit bestimmen die als Quadratrohr 14' ausgebildeten Versteifungsprofile 14 in ihrem Querschnitt, Verlauf und/oder Ausgestaltung den Verlauf und/oder Charakteristik der Biegesteifigkeit des Querbalkens 7. Durch die Ausgestaltung der Versteifungsprofile 14 des Querbalkens 7 nach der Ausführungsbeispiel der Fig. 2 bis 8 nimmt die Biegesteifigkeit von Mitte des Querbalkens 7 über seine jeweilige Hälfte zum jeweiligen äußeren Ende 16 abgestuft ab, hier durch den nahtlosen Übergang von dem Vorhandensein zu dem Nichtvorhandensein des Quadratrohres 14'.

Wie vorbeschrieben nimmt durch die Ausgestaltung des Versteifungsprofile 14 des Querbalkens 7 die Biegesteifigkeit von Mitte 17 des Querbalkens 7 über seine jeweilige Hälfte zum jeweiligen äußeren Ende entsprechend der an dem Querbalken 7 angeordneten Werkzeuge 8, 10 grob abgestuft ab.

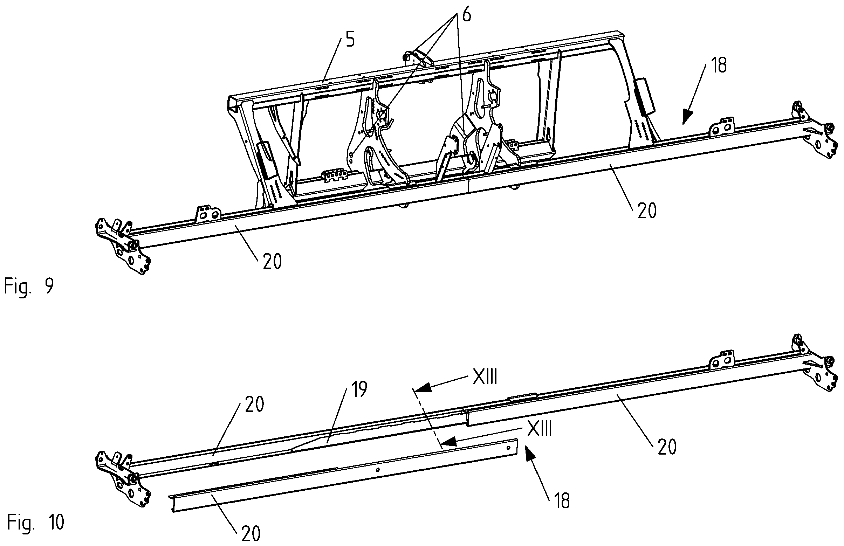

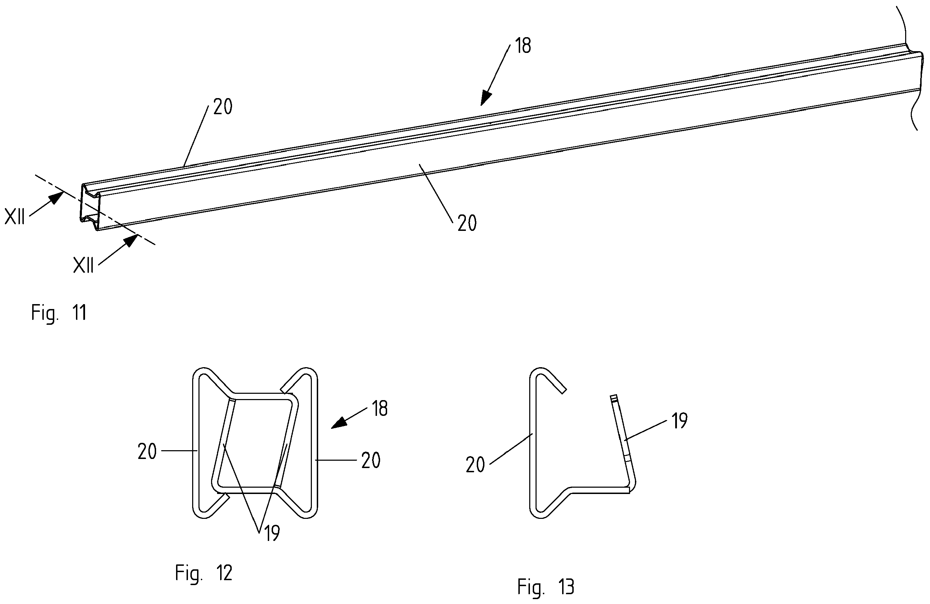

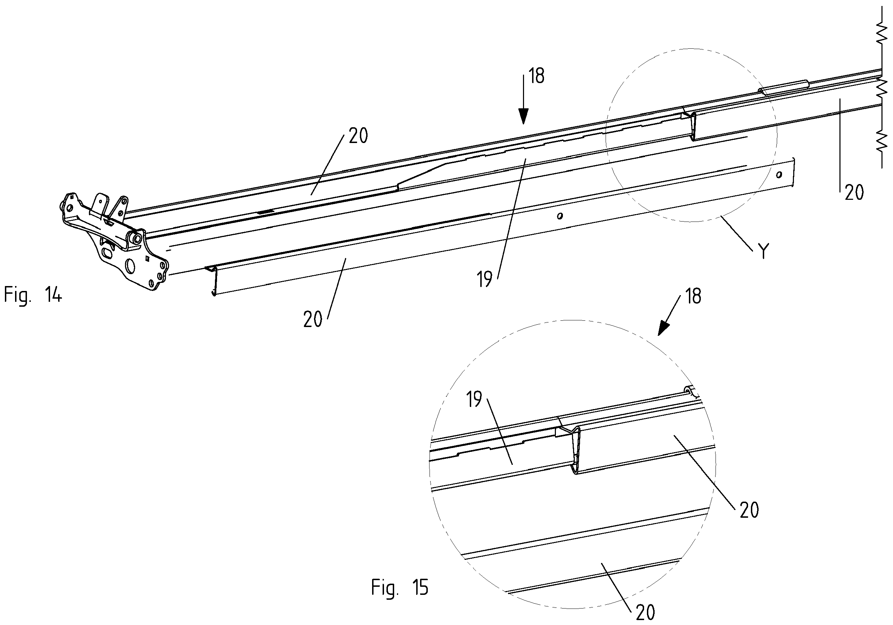

Das Ausführungsbeispiel für die Ausgestaltung des Querbalkens 18 gemäß den Fig. 9 bis 15 unterscheidet sich von dem Ausführungsbeispiel des Querbalkens 7 nach den Fig.2 bis 8 durch eine andere Anordnung und Ausgestaltung der Versteifungselemente im Inneren des Querbalkens 7 durch die Verwendung von Versteifungsschienen 19 anstelle von Versteifungsprofilen 14.

Die Versteifungsprofile sind an die Profilschienen 20 unmittelbar als Versteifungsschienen 19 sich anschließend angeformt.

Durch die Ausgestaltung der Versteifungsschienen 19 an die Anordnung der an dem Querbalken 18 angeordneten Werkzeuge 8, 10 zur Erreichung der zumindest annähernd geforderten Biegesteifigkeit über die gesamte Länge des Querbalkens 7 ist eine individuelle Anpassung gegeben. Durch in den Zeichnungen der Fig. 9 bis 15 ist eine Ausgestaltung der Versteifungsschienen 19 des Querbalkens 18 gegeben, bei der die Biegesteifigkeit von Mitte des Querbalkens 18 über seine jeweilige Hälfte zum jeweiligen äußeren Ende abnimmt. So nimmt die Biegesteifigkeit des Querbalkens 18 von der Mitte des Querbalkens 18 über seine jeweilige Hälfte zum jeweiligen äußeren Ende entsprechend der an dem Querbalken 18 angeordneten Werkzeuge 8, 10 ab.

## Patentansprüche

1. Querbalken (7, 18) zum Befestigen und Tragen von Werkzeugen (8, 10) eines landwirtschaftlichen Gerätes, wobei der Querbalken (7, 18) als aus zumindest zwei sich längs des Querbalkens (7, 18) erstreckender Längsprofilschienen (12, 13, 20)zusammengesetzter und zusammengeschweißter, vorzugsweise rechteckartiger Hohlbalken ausgebildet ist, **dadurch gekennzeichnet, dass** sich im Inneren des Hohlbalkens (7, 18) mit den Längsprofilschienen (12, 13, 20) verbundene Versteifungsschienen (19) und/oder Versteifungsprofile (14) zur Erhöhung der Biegesteifigkeit des Querbalkens (7, 18) befinden.

2. Querbalken nach Anspruch 1, **dadurch gekennzeichnet, dass** die Versteifungsschienen (19) und/oder Versteifungsprofile (14) in ihrem Querschnitt, Verlauf und/oder Ausgestaltung den Verlauf und/oder Charakteristik der Biegesteifigkeit des Querbalkens (7, 18) bestimmen.

3. Querbalken nach zumindest einem der vorstehenden Ansprüche, **dadurch gekennzeichnet, dass** die Ausgestaltung der Versteifungsschienen (19) und/oder Versteifungsprofile (14) an die Anordnung der an dem Querbalken (7, 18) angeordneten Werkzeuge (8, 10) zur Erreichung der zumindest annähernd geforderten Biegesteifigkeit über die gesamte Länge des Querbalkens (7, 18) individuell angepasst ist.

4. Querbalken nach zumindest einem der vorstehenden Ansprüche, **dadurch gekennzeichnet, dass** durch die Ausgestaltung der Versteifungsschienen (19) oder Versteifungsprofile (14) des Querbalkens (7, 18) die Biegesteifigkeit von Mitte des Querbalkens (7, 18) über seine jeweilige Hälfte zum jeweiligen äußeren Ende (16) abnimmt.

5. Querbalken nach zumindest einem der vorstehenden Ansprüche, **dadurch gekennzeichnet, dass** durch die Ausgestaltung der Versteifungsschienen (19) und/oder Versteifungsprofile (14) des Querbalkens (7, 18) die Biegesteifigkeit von Mitte des Querbalkens (7, 18) über seine jeweilige Hälfte zum jeweiligen äußeren Ende entsprechend der an dem Querbalken (7, 18) angeordneten Werkzeuge (8, 10) abnimmt.

6. Querbalken nach zumindest einem der vorstehenden Ansprüche, **dadurch gekennzeichnet, dass** die Profilschienen (12, 13, 20) und/oder Versteifungsprofile (14, 19) mit den angeformten Versteifungsschienen (19) als Abkantprofil ausgebildet sind.

7. Querbalken nach zumindest einem der vorstehenden Ansprüche, **dadurch gekennzeichnet, dass** die Versteifungsprofile (14) als Rechteckeck- oder Quadratrohr (14') ausgebildet ist und die Profilschienen (12, 13) außerhalb der als Rechteckeck- oder Quadratrohr (14) ausgebildeten Versteifungsprofile (14) mit unmittelbar an die Versteifungsprofile (14) sich anschließenden angeformten oberen oder unteren Verbindungsplatten (15) als Abkantprofil ausgebildet sind.
